# EUROPÄISCHE PATENTSCHRIFT

(11) **EP 1 782 981 B1**
(45) Veröffentlichungstag und Bekanntmachung des Hinweises auf die Patenterteilung: **21.05.2008**
(21) Anmeldenummer: 05023864.1
(22) Anmeldetag: 02.11.2005
(51) Int. Cl.: B60J 5/06

(54) **Schiebetürsystem**
Sliding door system
Système pour porte coulissante

(43) Veröffentlichungstag der Anmeldung: 09.05.2007
(73) Patentinhaber: Delphi Technologies, Inc., Troy, MI 48007 (US)
(72) Erfinder: Daub, Klaus Udo, 47259 Duisburg (DE); Larisch, Markus, 46514 Schermbeck (DE)
(74) Vertreter: Manitz, Finsterwald & Partner GbR

(56) Entgegenhaltungen:
- PATENT ABSTRACTS OF JAPAN Bd. 014, Nr. 473 (M-1035), 16. Oktober 1990 (1990-10-16) -& JP 02 189252 A (SUZUKI MOTOR CO LTD), 25. Juli 1990 (1990-07-25)
- PATENT ABSTRACTS OF JAPAN Bd. 1999, Nr. 12, 29. Oktober 1999 (1999-10-29) & JP 11 192902 A (YAZAKI CORP), 21. Juli 1999 (1999-07-21)
- PATENT ABSTRACTS OF JAPAN Bd. 2003, Nr. 12, 5. Dezember 2003 (2003-12-05) & JP 2003 220904 A (SUMITOMO WIRING SYST LTD), 5. August 2003 (2003-08-05)

## Beschreibung

Die Erfindung betrifft ein Schiebetürsystem, insbesondere für Kraftfahrzeugschiebetüren mit wenigstens einer Führungsschiene mit einem Schienenkörper und wenigstens einem mit dem Schienenkörper zur Führung der Schiebetür zusammenwirkenden Schieneneingriffsteil zum Eingriff in den Schienenkörper.

Insbesondere bei Schiebetüren in Kraftfahrzeugen ist es oftmals notwendig, eine leitende Verbindung zwischen dem Fahrzeug und der Schiebetür zu schaffen, um elektrische Verbraucher, wie zum Beispiel Fensterheber, in der Schiebetür anzusteuern und/oder mit Strom zu versorgen.

Bekannte Lösungen sehen Kettenführungen oder Drahtwurmführungen für entsprechende Kabel vor. Ein Ende des Kabels ist dabei an einem entsprechenden stromzuführenden Anschluss des Fahrzeugs befestigt und ein zweites Ende des Kabels an einem entsprechenden Anschluss der Schiebetür, der zum Beispiel weiter zu einem elektrischen Verbraucher in der Schiebetür führt. Die Führungen sind dabei flexibel ausgestaltet, um die Schiebebewegung der Schiebetür nicht zu sperren.

Derartige Lösungen erzeugen bei der Bewegung der Schiebetür jedoch zusätzliche Geräusche und einen erhöhten Kraftaufwand beim Schieben der Schiebetür. Außerdem ist die Verletzungsgefahr für ein so geführtes Kabel hoch.

Andere Lösungen weisen Schleifkontakte auf, die bei der Schiebebewegung elektrisch leitenden Kontakt mit gesondert vorgesehenen Buskontakten halten, die sich entlang des Schiebeweges erstrecken.

JP 11192902 A beschreibt die Energieversorgung für eine Kraftfahrzeugschiebetür mit einer Führungsschiene mit einem darin laufenden Schieneneingriffsteil. Elektrische Kontakte erstrecken sich entlang eines parallel zur Führungsschiene angeordneten Stromversorgungskörpers, in dem Schleifkontakte vorgesehen sind.

Ein Schiebetürsystem mit den Merkmalen des Oberbegriffs des Anspruchs 1 ist aus JP-A-02189252 bekannt.

Aufgabe der vorliegenden Erfindung ist es, ein Schiebetürsystem anzugeben, bei dem eine elektrische Verbindung zwischen einem Anschluss des Fahrzeugs und einem Anschluss der Schiebetür auf einfache und robuste Weise zur Verfügung gestellt wird.

Diese Aufgabe wird mit einem Schiebetürsystem mit den Merkmalen des Anspruchs 1 gelöst. Unteransprüche sind auf bevorzugte Ausgestaltungen gerichtet.

Im vorliegenden Text werden die elektrischen Kontakte an bzw. in dem Schienenkörper als erste elektrische Kontakte und die elektrischen Kontakte an bzw. in dem Schieneneingriffsteil als zweite elektrische Kontakte bezeichnet. In der Regel ist der Schienenkörper am Fahrzeugkörper vorgesehen und das Schieneneingriffsteil an der Schiebetür. Die Erfindung umfasst jedoch auch Ausgestaltungen, bei denen am Fahrzeugkörper ein Schieneneingriffsteil ausgebildet ist, auf dem ein Schienenkörper verschiebbar gelagert ist, der sich an der Schiebetür befindet.

Bei der erfindungsgemäßen Lösung sind keine Kabelverbindungen zwischen dem Fahrzeugkörper und der Schiebetür notwendig. Die elektrisch leitende Verbindung wird durch den direkten Kontakt der ersten und zweiten Kontakte zur Verfügung gestellt, die sich bei Bewegung der Schiebetür aneinander bewegen. Durch die Verwendung des Schienenkörpers und der Schieneneingriffsteile selbst sind zusätzliche Elemente zur Herstellung einer elektrischen Verbindung nicht notwendig. Zusätzlich zu der Führungsschiene vorgesehene elektrische Abgriffe sind ebenfalls nicht notwendig. Die erfindungsgemäße Lösung ist einfach im Aufbau und sehr robust. Auch kurvenförmige Schienenwege ohne Behinderung durch Drahtwurm- oder Kettenführungen sind realisierbar.

Bei Fahrzeugen, bei denen mehrere Führungsschienen für eine Schiebetür vorgesehen sind, kann jede Führungsschiene einen ersten elektrischen Kontakt zur Verfügung stellen, der jeweils mit einem zweiten elektrischen Kontakt eines Schieneneingriffsteils zusammenwirkt, das in die jeweilige Führungsschiene eingreift. Andererseits kann vorgesehen sein, dass in einer einzelnen Führungsschiene, die mehrere erste Kontakte zur Verfügung stellt, mehrere Schieneneingriffsteile geführt werden, die derart ausgestaltet sind, dass ein Schieneneingriffsteil jeweils nur mit einem ersten Kontakt der Führungsschiene zusammenwirkt.

Besonders bevorzugt und einfach ist eine Ausführungsform, bei der die elektrischen Verbindungen mit Hilfe einer Führungsschiene und einem darin laufenden Schieneneingriffsteil zur Verfügung gestellt werden, wobei die Anzahl der ersten Kontakte in dieser Führungsschiene der Anzahl der zweiten Kontakte an dem Schieneneingriffsteil entspricht.

Bei einer vorteilhaften Ausgestaltung wird die elektrische Verbindung zwischen den ersten und zweiten Kontakten über Schleifkontakte hergestellt. Solche Schleifkontakte sind sicher und kostengünstig.

Bei anderen Ausführungsformen sind in dem Schienenkörper bzw. in dem Schieneneingriffsteil Nuten vorgesehen, in denen Kugeln nach Art eines Kugellagers laufen, wenn die Schiebetür bewegt wird, wobei die Kugeln aus leitendem Material sind und mit entsprechend angeordneten leitenden Bereichen des Schienenkörpers bzw. des Schieneneingriffsteils zur Herstellung einer elektrischen Verbindung zusammenwirken.

Bei einer einfachen Ausgestaltung besteht der Schienenkörper der Führungsschiene aus mehreren in Schieberichtung parallelen, voneinander isolierten elektrisch leitenden Bereichen, die jeweils einen ersten elektrischen Kontakt zur Verfügung stellen.

Sind in einem Schienenkörper mehrere erste elektrische Kontakte vorgesehen, so kann bei einer Ausführungsform das in der Führungsschiene laufende Schieneneingriffsteil aus elektrisch voneinander isolierten, einzelnen elektrisch leitenden Bereichen bestehen, von denen jeweils einer mit einem ersten Kontakt zusammenwirkt.

Die elektrische Verbindung zwischen ersten und zweiten Kontakten kann zur Energieversorgung von elektrischen Verbrauchern eingesetzt werden. Zusätzlich können über die ersten und zweiten Kontakte Steuersignale an entsprechende Verbraucher gegeben werden. Andererseits können die elektrischen Verbindungen als Datenleitungen verwendet werden, um zum Beispiel Sensorsignale auszulesen, die von Sensoren in der Schiebetür erzeugt werden.

Dabei kann eine Versorgungsleitung für mehrere elektrische Verbraucher in der Schiebetür verwendet werden, wobei mit Hilfe von Steuersignalen vorgegeben wird, welcher Verbraucher aktiv sein soll. Die Steuerleitung wird dementsprechend nach Art eines Steuerbusses für mehrere Verbraucher verwendet.

Bei einer besonders bevorzugten Ausgestaltung wird eine Verbindung zwischen einem ersten und einem zweiten Kontakt als Versorgungsleitung und eine weitere Verbindung zwischen einem weiteren ersten und einem weiteren zweiten Kontakt als Masseverbindung, gegebenenfalls für mehrere Verbraucher verwendet. Der Versorgungsleitung wird ein Daten-und/oder Steuersignal aufgeprägt, das eine Adresse beinhaltet, die zur Auswahl des anzusteuernden Verbrauchers dient. Auf diese Weise können mehrere elektrische Verbraucher mit nur zwei elektrischen Verbindungen angesteuert und betrieben werden.

Die Erfindung wird anhand spezieller Ausführungsformen, die in den Figuren schematisch dargestellt sind, im Detail erläutert.

Dabei zeigt:
- Fig. 1: eine erste Ausführungsform eines erfindungsgemäßen Schiebetürensystems im seitlichen Querschnitt,
- Fig. 2: ein Schiebetürensystem im seitlichen Querschnitt,
- Fig. 3: ein anderes Schiebetürensystem im seitlichen Querschnitt,
- Fig. 4: eine zweite Ausführungsform eines erfindungsgemäßen Schiebetürensystems im seitlichen Querschnitt,
- Fig. 5: eine dritte Ausführungsform eines erfindungsgemäßen Schiebetürensystems im seitlichen Querschnitt und
- Fig. 6: eine Perspektivansicht des Schienenkörpers eines anderen Schiebetürensystems.

Gleiche Elemente oder in ihrer Funktion gleichwertige Elemente sind in den Figuren in der Regel mit denselben Bezugsziffern versehen. Die Figuren sind schematischer Natur und nicht notwendigerweise maßstabsgetreu.

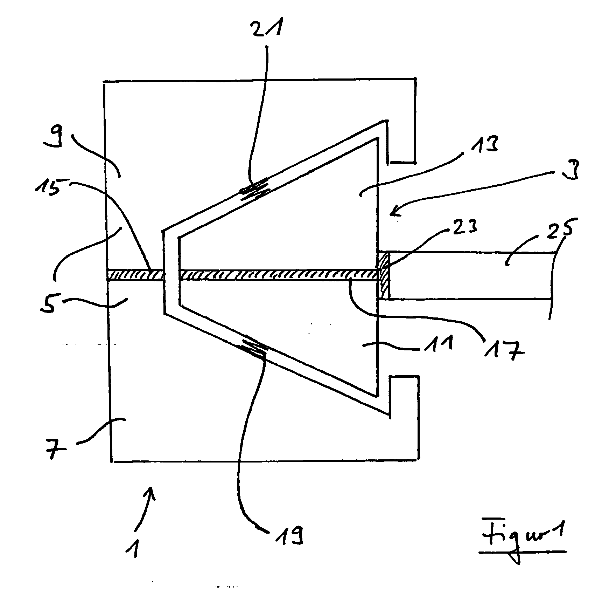

Fig. 1 zeigt einen schematischen Querschnitt durch eine erste erfindungsgemä-ße Ausführungsform. Bezugsziffer 1 bezeichnet in der Gesamtheit die Führungsschiene mit dem Schienenkörper 5, in den das Schieneneingriffsteil 3 eingreift. In an sich bekannter und in Fig. 1 nicht dargestellter Weise wird das Schieneneingriffsteil 3 in der Führungsschiene 1 zum Beispiel durch Kugellager oder ähnliches geführt. Die Bewegungsrichtung des Schieneneingriffsteils in der Führungsschiene 1 ist senkrecht zur Papierebene. Der Schienenkörper 5 besteht aus zwei ersten, sich senkrecht zur Papierebene erstreckenden elektrisch leitenden Bereichen 7 und 9, die durch den elektrisch isolierenden Bereich 15, der zum Beispiel aus Kunststoff gebildet sein kann, voneinander getrennt sind. Die einzelnen leitenden Bereiche 7, 9 können daher als einzelne elektrische Kontakte verwendet werden. Das Schieneneingriffsteil 3 besteht andererseits aus zwei zweiten elektrisch leitenden Bereichen 11, 13, die durch den elektrisch isolierenden Bereich 17 voneinander getrennt sind, der zum Beispiel aus Kunststoff bestehen kann.

In nicht gezeigter Weise sind die elektrischen Bereiche 7, 9 des Schienenkörpers 5 mit entsprechenden elektrischen Zuleitungen verbunden. Die elektrisch leitenden Bereiche 11, 13 des Schieneneingriffsteils 3 sind in nicht dargestellter Weise mit elektrischen Verbrauchern oder Sensoren in der Schiebetür verbunden, an der das Schieneneingriffsteils 3 mit der Halterung 25 befestigt ist. Die Halterung 25 kann zum Beispiel aus Metall sein, wenn ein elektrisch isolierender Bereich 23 zwischen der Halterung 25 und den elektrisch leitenden Bereichen 11, 13 des Schieneneingriffsteils 3 vorgesehen ist.

Die elektrisch leitenden Bereiche 7, 9 des Schienenkörpers 5 stellen erste Kontakte dar, während die elektrisch leitenden Bereiche 11, 13 des Schieneneingriffsteils 3 zweite elektrische Kontakte zur Verfügung stellen. Jeweils ein erster elektrischer Kontakt und ein zweiter elektrischer Kontakt sind über je einen Schleifkontakt miteinander in elektrischer Verbindung, die in Fig. 1 mit 19, 21 bezeichnet und nur schematisch dargestellt sind. Sie können zum Beispiel durch Federn gebildet werden, die entweder an den entsprechenden leitenden Bereich des Schieneneingriffsteils 3 oder an dem entsprechenden leitenden Bereich des Schienenkörpers 5 befestigt sind und durch die Federspannung eine Verbindung mit dem anderen Kontakt zur Verfügung stellen. Ebenso sind zum Beispiel Bürstenkontakte möglich.

Bei einer Ausführungsform, wie sie in Fig. 1 schematisch dargestellt ist, kann zum Beispiel der elektrisch leitende Bereich 9 als Versorgungsleitung verwendet werden. Der elektrisch leitende Bereich 7 dient dann als Masseanschluss. Auf diese Weise ist es möglich, eine Versorgungsspannung über den elektrisch leitenden Bereich 9 des Schienenkörpers, den Schleifkontakt 21 und den elektrischen Bereich 13 des Schieneneingriffsteils 3 zur Verfügung zu stellen, mit dem ein elektrischer Verbraucher der Schiebetür gespeist werden kann. Der Masseanschluss des elektrischen Verbrauchers ist über den elektrisch leitenden Bereich 11 und den Schleifkontakt 19 mit dem Masseanschluss 7 verbunden.

Dem Versorgungssignal, das über den Pfad 9, 21, 13 zur Verfügung gestellt wird, wird ein Signal aufmoduliert, das den elektrischen Verbrauchern in der Schiebetür gegebenenfalls unterschiedliche Steuersignale übermittelt, zum Beispiel zum Schließen eines Fensters oder zum Öffnen eines Fensters in der Schiebetür.

Außerdem können über die Anordnung der Fig. 1 mehrere elektrische Verbraucher mit Energie versorgt werden bzw. mit Steuersignalen bedient werden. Dazu wird dem Versorgungspfad 9, 21, 13 ein solches Steuersignal aufgeprägt, das eine Adresse enthält, die den jeweils anzusprechenden Verbraucher auswählt. Mit nur zwei elektrischen Verbindungen kann auf diese Weise also sowohl die Versorgung als auch die Ansteuerung von einem oder mehreren elektrischen Verbrauchern gewährleistet werden.

Andererseits kann ein Datensignal, das der Versorgungsleitung aufgeprägt, insbesondere aufmoduliert ist, auch zum Auslesen eines oder mehrerer Sensoren verwendet werden, die in der Schiebetür vorgesehen sind und zum Beispiel Signale über den Öffnungsgrad eines Fensters an ein Fahrzeugsteuerungssystem zurück übermitteln.

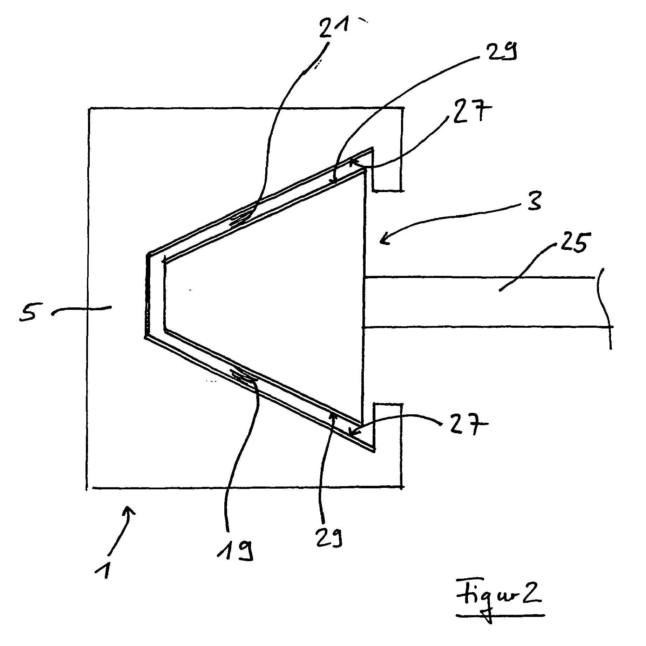

Fig. 2 zeigt nur zum besseren Verständnis in schematischer Darstellung ein Schiebetürsystem bei dem der Schienenkörper 5 in seiner Gesamtheit aus nicht leitendem Material, zum Beispiel aus Kunststoff gebildet ist. An den Innenflächen des Schienenkörpers 5 sind leitende Flächen 27 vorgesehen, die in nicht dargestellter Weise mit dem Versorgungssystem des Fahrzeugs verbunden sind. Bei dem dargestellten System ist das Schieneneingriffsteil 3 ebenfalls aus nicht leitendem Material, zum Beispiel aus Kunststoff gefertigt, wobei an denjenigen Flächen, die den leitenden Flächen 27 des Schienenkörpers 5 gegenüberliegen, ebenfalls leitende Flächen 29 vorgesehen sind. Die leitenden Flächen 29 des Schieneneingriffsteils 3 sind in nicht dargestellter Weise mit elektrischen Verbrauchern und/oder Sensoren in der Schiebetür verbunden, an der das Schieneneingriffsteil 3 über die Halterung 25 befestigt ist. Über Schleifkontakte 19 bzw. 21 sind die leitenden Flächen 27, 29 miteinander in elektrischem Kontakt um elektrische Verbindungen zur Verfügung zu stellen.

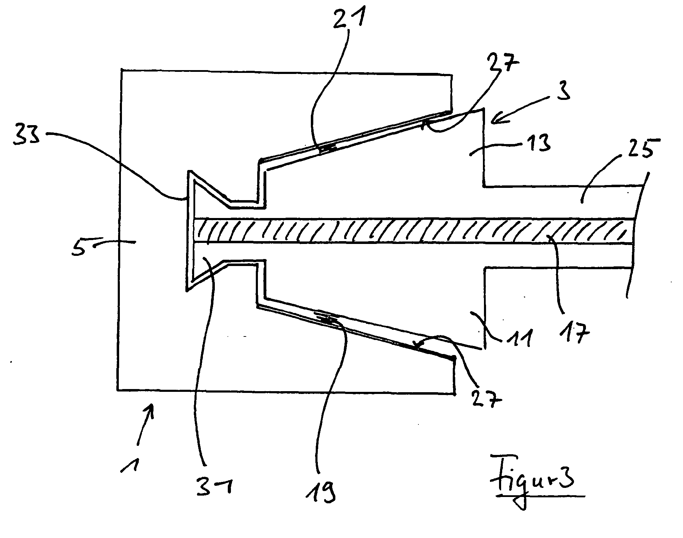

Fig. 3 zeigt in schematischem Querschnitt ein andere System, bei dem das Schieneneingriffsteil 3 einen zusätzlichen Führungsfortsatz 31 aufweist, der in eine entsprechende Aufnahme 33 des Schienenkörpers 5 eingreift, um eine Führung des Schieneneingriffsteils 3 in der Führungsschiene 1 zu gewährleisten. Dargestellt ist ein System, in dem der Schienenkörper 5 über leitende Flächen 27 verfügt, die jeweils erste Kontakte zur Verfügung stellen. Das Schieneneingriffsteil 3 besteht aus zwei sich senkrecht zur Figurenebene parallel zueinander erstreckenden leitenden Bereichen 11 und 13. Über Schleifkontakte 19 bzw. 21 stehen die elektrischen Bereiche 13 bzw. 11 mit den leitenden Flächen 27 des Schienenkörpers in elektrischem Kontakt.

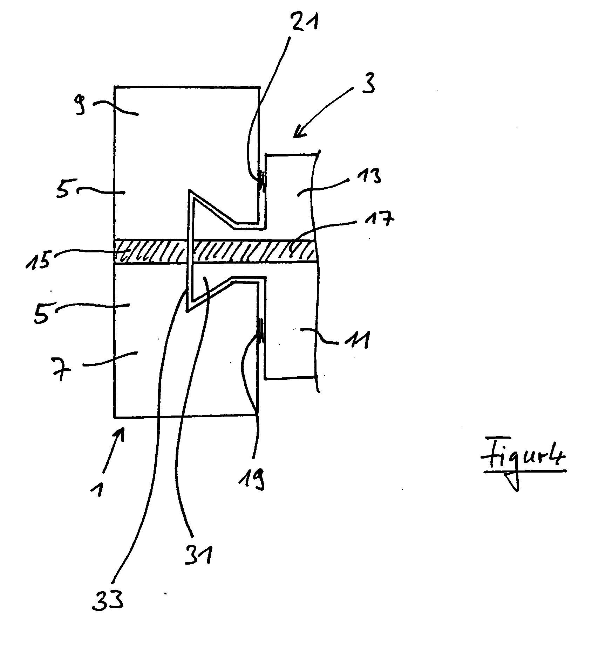

Fig. 4 zeigt eine erfindungsgemäße Abwandlung des Systems der Fig.3, bei der ähnlich wie in Fig. 1 sowohl der Schienenkörper 5 als auch das Schieneneingriffsteil 3 aus elektrisch leitenden, parallelen, voneinander isolierten Bereichen 7, 9 bzw. 11, 13 bestehen. Wie auch bei der Ausführungsform der Fig. 1 wird der elektrische Kontakt zwischen den ersten Kontakten 9, 7 einerseits und den zweiten Kontakten 13, 11 andererseits über Schleifkontakte 21 bzw. 19 gewährleistet. Ein Führungsfortsatz 31 des Schieneneingriffsteils 3 ist vorgesehen, der in einer Aufnahme 33 der Führungsschiene 1 geführt ist.

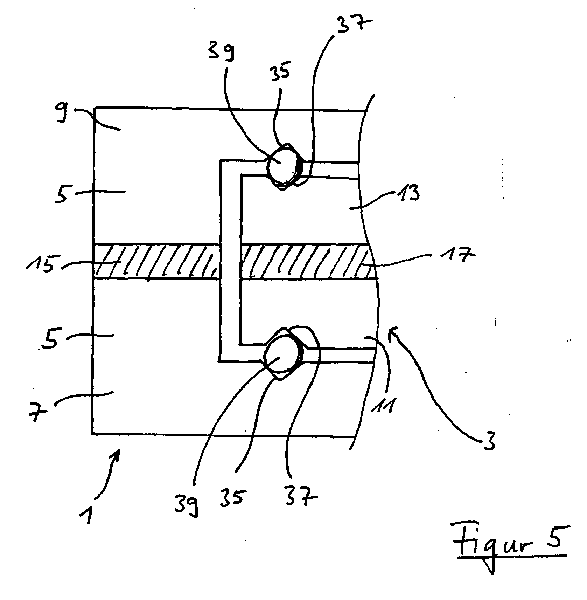

Fig. 5 zeigt eine Ausführungsform, bei der die elektrische Verbindung zwischen den ersten Kontakten 9, 7 einerseits und den zweiten Kontakten 13, 11 andererseits nicht über Schleifkontakte sondern über Kugeln 39 zur Verfügung gestellt wird, die in Nuten 35 des Schienenkörpers 5 bzw. Nuten 37 des Schieneneingriffsteils 3 abrollen, wenn das Schieneneingriffsteil 3 in der Führungsschiene 1 verschoben wird. Kugeln 39 sind aus elektrisch leitendem Material gebildet, so dass einerseits der elektrisch leitende Bereich 9 des Schienenkörpers 5 elektrisch mit dem elektrisch leitenden Bereich 13 des Schieneneingriffsteils 3 und andererseits der elektrisch leitende Bereich 7 des Schienenkörpers 5 mit dem anderen elektrisch leitenden Bereich 11 des Schieneneingriffsteils 3 elektrisch verbunden ist.

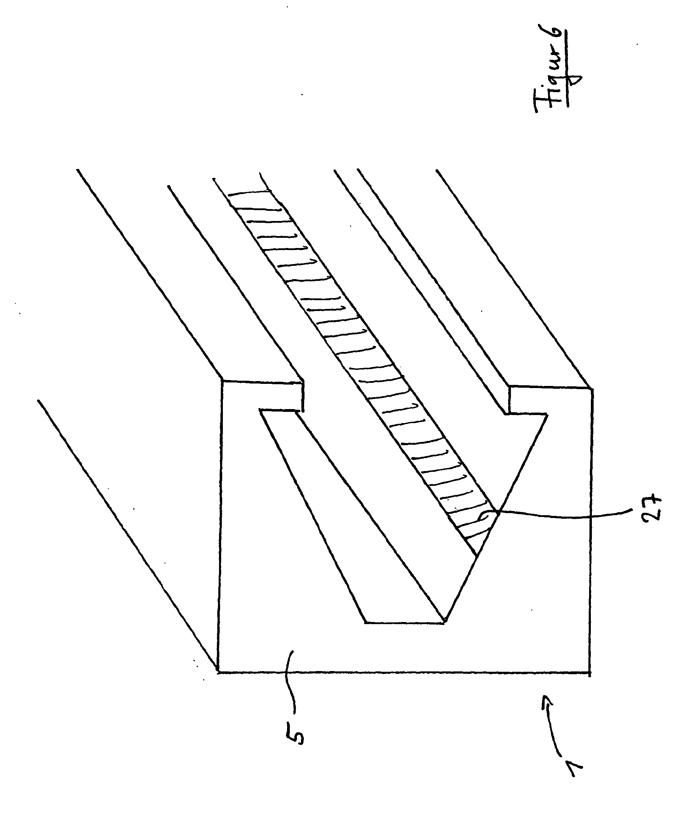

Fig. 6 zeigt nur zum besseren Veständnis in perspektivischer Darstellung den Schienenkörper 5 eines Systems, bei der ein metallisches Band, zum Beispiel ein Kupferband 27 vorgesehen ist, um den elektrischen Kontakt zu einem hier nicht dargestellten Schieneneingriffsteil herzustellen. Nicht sichtbar ist ein zweites metallisches Band, das dem dargestellten metallischen Band 27 gegenüber in dem Schienenkörper 5 befestigt ist, um einen weiteren ersten Kontakt zur Verfügung zu stellen.

In den dargestellten Ausführungsformen sind jeweils zwei elektrische Verbindungen in einem System aus Schienenkörper und Schieneneingriffsteil realisiert. Bei Schiebetüren, bei denen mehrere Schieneneingriffsteile in eine entsprechende Anzahl von Führungsschienen eingreifen, kann eine elektrische Verbindung pro Einheit aus Schienenkörper und eingreifendem Schieneneingriffsteil gebildet werden. In diesem Fall sind keine isolierenden Bereiche 15, 17 notwendig.

Bei anderen nicht dargestellten Ausführungsformen besteht zum Beispiel der Schienenkörper 5 der Führungsschiene 1 aus zwei elektrisch leitenden, parallelen, voneinander isolierten Bereichen 7, 9, wie sie in Fig. 1 gezeigt sind. In die Führungsschiene 1 können jedoch mehrere Schieneneingriffsteile 3 eingreifen, die jeweils derart einen leitenden und einen nicht leitenden Bereich umfassen, dass nur ein Schieneneingriffsteil in elektrischen Kontakt mit dem elektrisch leitenden Bereich 9 des Schienenkörpers 5 und ein anderes nur in elektrischen Kontakt mit dem elektrisch leitenden Bereich 7 des Schienenkörpers 5 tritt. Dazu kann zum Beispiel bei einem Schieneneingriffsteil nur die Oberseite und bei einem anderen Schieneneingriffsteil nur die Unterseite elektrisch leitend sein bzw. mit dem elektrischen Verbraucher verbunden sein.

Das erfindungsgemäße Schiebetürensystem ermöglicht elektrische Verbindungen zur Versorgung bzw. zur Steuerung von elektrischen Verbrauchern in der Schiebetür. Führungsschiene und Schieneneingriffsteile selbst werden verwendet, um die elektrische Verbindung zur Verfügung zu stellen. Zusätzliche Elemente, wie in Drahtwürmern geführte Kabel oder gesonderte elektrische Abgriffe sind nicht notwendig. Das erfindungsgemäße System ist daher einfach, robust und kostengünstig.

### Bezugszeichenliste

- 1: Führungsschiene
- 3: Schieneneingriffsteil
- 5: Schienenkörper
- 7, 9: elektrisch leitende Bereiche des Schienenkörpers
- 11, 13: elektrisch leitende Bereiche des Schieneneingriffsteils
- 15: isolierender Bereich des Schienenkörpers
- 17: isolierender Bereich des Schieneneingriffsteils
- 19, 21: Schleifkontakte
- 23: isolierender Bereich
- 25: Halterung
- 27: leitende Oberfläche an einem Schienenkörper
- 29: leitende Oberfläche an einem Schieneneingriffsteil
- 31: Führungsfortsatz des Schieneneingriffsteils
- 33: Aufnahme für den Führungsfortsatz
- 35: Kugelaufnahme des Schienenkörpers
- 37: Kugelaufnahme des Schieneneingriffsteils
- 39: metallische Kugel

## Patentansprüche

1. Schiebetürsystem, insbesondere für Kraftfahrzeugschiebetüren, mit
- wenigstens einer Führungsschiene (1) mit einem Schienenkörper (5)
- wenigstens einem mit dem Schienenkörper (5) zur Führung der Schiebetür zusammenwirkenden Schieneneingriffsteil (3) zum Eingriff in den Schienenkörper (5),
- wenigstens zwei ersten elektrischen Kontakten (7, 9), die sich im Wesentlichen entlang einer Führungsschiene (1) erstrecken, und
- mit einer der Anzahl der ersten elektrischen Kontakte entsprechenden Anzahl von zweiten elektrischen Kontakten (11, 13), die sich bei Bewegung der Schiebetür derart entlang der ersten Kontakte (7, 9) bewegen, dass zwischen jeweils einem ersten und jeweils einem zweiten Kontakt eine elektrisch leitende Verbindung besteht, wobei die zweiten Kontakte durch ein Schieneneingriffsteil (3) oder Teile (11, 13) davon gebildet werden, in einem Schieneneingriffsteil integriert sind oder an einem Schieneneingriffsteil (3) ausgebildet sind,
**dadurch gekennzeichnet, dass**
die wenigstens zwei ersten Kontakte durch Teile (7, 9) des Schienenkörpers (5) einer Führungsschiene gebildet werden.

2. Schiebetürsystem nach Anspruch 1, bei dem eine Führungsschiene (1) mit wenigstens einem ersten elektrischen Kontakt (7, 9) und ein in die Führungsschiene eingreifendes Schieneneingriffsteil (3) mit einer entsprechenden Anzahl von zweiten elektrischen Kontakten (11, 13) vorgesehen ist.

3. Schiebetürsystem nach Anspruch 1, bei dem mehr als eine Führungsschiene vorgesehen ist und je Führungsschiene ein erster Kontakt vorgesehen ist, der mit einem zweiten Kontakt eines Schieneneingriffteils zusammenwirkt.

4. Schiebetürsystem nach einem der Ansprüche 1 bis 3, bei dem mehr als ein Schieneneingriffsteil vorgesehen ist und je Schieneneingriffsteil ein zweiter Kontakt vorgesehen ist.

5. Schiebetürensystem nach einem der Ansprüche 1 bis 4, bei dem das wenigstens eine Schieneneingriffsteil (3) an der Schiebetür vorgesehen ist.

6. Schiebetürensystem nach einem der Ansprüche 1 bis 5, bei dem die elektrische Verbindung zwischen ersten (7, 9) und zweiten (11, 13) Kontakten über Schleifkontakte (19, 21) hergestellt wird.

7. Schiebetürensystem nach einem der Ansprüche 1 bis 6, bei dem der Schienenkörper (5) einer Führungsschiene (1) aus einer der Anzahl der ersten Kontakte dieser Führungsschiene entsprechenden Anzahl elektrisch voneinander isolierter, paralleler, elektrisch leitender Bereiche (7, 9) besteht.

8. Schiebetürensystem nach einem der Ansprüche 1 bis 7, bei dem das Schieneneingriffsteil (3) aus einer der Anzahl der zweiten Kontakte dieses Schieneneingriffsteiles entsprechenden Anzahl von elektrisch voneinander isolierten, elektrisch leitenden Bereichen (11, 13) besteht.

9. Schiebetürensystem nach einem der Ansprüche 1 bis 8, bei dem die elektrische Verbindung zwischen ersten und zweiten Kontakten zur Energieversorgung von elektrischen Verbrauchern in der Schiebetür und/oder zur Steuerung von elektrischen Verbrauchern in der Schiebetür und/oder zur Datenübertragung vorgesehen ist.

10. Schiebetürensystem nach einem der Ansprüche 1 bis 9, bei dem eine Verbindung zwischen einem ersten und einem zweiten Kontakt als Versorgungsleitung und eine weitere Verbindung zwischen einem weiteren ersten und einem weiteren zweiten Kontakt als Masseverbindung vorgesehen sind und Daten- und/oder Steuersignale der Versorgungsleitung aufgeprägt, insbesondere aufmoduliert werden.

11. Schiebetürensystem nach Anspruch 10, bei dem die Daten-und/oder Steuersignale Adressen beinhalten, die den elektrischen Verbraucher auswählen, für den das jeweilige Daten- und/oder Steuersignal bestimmt ist.

## Claims

1. A sliding door system, in particular for motor vehicle sliding doors, comprising
- at least one guide rail (1) with a rail body (5);
- at least one rail engagement part (3) for engagement into the rail body (5) and cooperating with the rail body (5) for the guidance of the sliding door;
- at least two first electrical contacts (7, 9) which extend substantially along a guide rail (1); and
- a number of second electrical contacts (11, 13) which correspond to the number of the first electrical contacts and which move along the first contacts (7, 9) on a movement of the sliding door such that in each case an electrically conductive connection is present between a respective first contact and a respective second contact, with the second contacts being formed by a rail engagement part (3) or parts (11, 13) thereof, being integrated in a rail engagement part or being formed at a rail engagement part (3).
**characterized in that** the at least two first contacts are formed by parts (7, 9) of the rail body (5) of a guide rail.

2. A sliding door system in accordance with claim 1, wherein a guide rail (1) having at least one first electrical contact (7, 9) is provided and a rail engagement part (3) engaging into the guide rail and having a corresponding number of second electrical contacts (11, 13) is provided.

3. A sliding door system in accordance with claim 1, wherein more than one guide rail is provided and a first contact is provided per guide rail which cooperates with a second contact of a rail engagement part.

4. A sliding door system in accordance with any one of the claims 1 to 3, wherein more than one rail engagement part is provided and a second contact is provided per rail engagement part.

5. A sliding door system in accordance with any one of the claims 1 to 4, wherein the at least one rail engagement part (3) is provided at the sliding door.

6. A sliding door system in accordance with any one of the claims 1 to 5, wherein the electrical connection between first contacts (7, 9) and second contacts (11, 13) is established via sliding contacts (19, 21).

7. A sliding door system in accordance with any one of the claims 1 to 6, wherein the rail body (5) of a guide rail (1) consists of a number of parallel, electrically conductive regions (7, 9) which are electrically insulated from one another and which correspond to the number of the first contacts of this guide rail.

8. A sliding door system in accordance with any one of the claims 1 to 7, wherein the rail engagement part (3) consists of a number of electrically conductive regions (11, 13) which are electrically insulated from one another and which correspond to the number of the second contacts of this guide rail.

9. A sliding door system in accordance with any one of the claims 1 to 8, wherein the electrical connection between the first contacts and the second contacts is provided for the energy supply of electrical consumers in the sliding door and/or for the control of electrical consumers in the sliding door and/or for data transmission.

10. A sliding door system in accordance with any one of the claims 1 to 9, wherein a connection between a first contact and a second contact is provided as a supply line and a further connection between a further first contact and a further second contact is provided as a ground connection and data signals and/or control signals are imposed, in particular modulated, on the supply line.

11. A sliding door system in accordance with claim 10, wherein the data signals and/or control signals contain addresses which select the electrical consumer for which the respective data signal and/or control signal is determined.

## Revendications

1. Système pour porte coulissante, en particulier pour porte coulissante de véhicule automobile, comportant
- au moins un rail de guidage (1) avec un corps de rail (5)
- au moins une partie d'engagement de rail (3) coopérant avec le corps de rail (5) pour guider la porte coulissante, pour l'engagement dans le corps de rail (5),
- au moins deux premiers contacts électriques (7, 9) qui s'étendent sensiblement le long d'un rail de guidage (1), et
- avec un nombre, correspondant au nombre de premiers contacts électriques, de seconds contacts électriques (11, 13) qui se déplacent, lors du mouvement de la porte coulissante, le long des premiers contacts (7, 9) de manière qu'entre chaque premier contact et chaque second contact il existe une liaison électriquement conductrice, les seconds contacts étant formés par une partie d'engagement de rail (3) ou des parties (11, 13) de celle-ci, étant intégrés dans une partie d'engagement de rail ou réalisés sur une partie d'engagement de rail (3),
**caractérisé en ce que**
les au moins deux premiers contacts sont formés par des parties (7, 9) du corps de rail (5) d'un rail de guidage.

2. Système pour porté coulissante selon la revendication 1, dans lequel un rail de guidage (1) avec au moins un premier contact électrique (7, 9) et une partie d'engagement de rail (3), s'engageant dans le rail de guidage, est prévu avec un nombre correspondant de seconds contacts électriques (11, 13).

3. Système pour porte coulissante selon la revendication 1, dans lequel il est prévu plus d'un rail de guidage et par rail de guidage il est prévu un premier contact qui coopère avec un second contact d'une partie d'engagement de rail.

4. Système pour porte coulissante selon l'une quelconque des revendications 1 à 3, dans lequel il est prévu plus d'une partie d'engagement de rail et, par partie d'engagement de rail, un second contact.

5. Système pour porte coulissante selon l'une quelconque des revendications 1 à 4, dans lequel la au moins une partie d'engagement de rail (3) est prévue sur la porte coulissante.

6. Système pour porte coulissante selon l'une quelconque des revendications 1 à 5, dans lequel la liaison électrique entre les premiers contacts (7, 9) et les seconds contacts (11, 13) est réalisée à travers des contacts frottants (19, 21).

7. Système pour porte coulissante selon l'une quelconque des revendications 1 à 6, dans lequel le corps de rail (5) d'un rail de guidage (1) est constitué d'un nombre, correspondant au nombre des premiers contacts de ce rail de guidage, de zones (7, 9) électriquement conductrices, parallèles, isolées électriquement les unes des autres.

8. Système pour porte coulissante selon l'une quelconque des revendications 1 à 7, dans lequel la partie d'engagement de rail (3) est constituée d'un nombre, correspondant au nombre de seconds contacts de cette partie d'engagement de rail, de zones (11, 13) électriquement conductrices, isolées électriquement les unes des autres.

9. Système pour porte coulissante selon l'une quelconque des revendications 1 à 8, dans lequel la liaison électrique entre les premiers et les seconds contacts est prévue pour l'alimentation en énergie de récepteurs électriques dans la porte coulissante et/ou pour la commande de récepteurs électriques dans la porte coulissante, et/ou pour la transmission de données.

10. Système pour porte coulissante selon l'une quelconque des revendications 1 à 9, dans lequel il est prévu une liaison entre un premier et un second contact en tant que ligne d'alimentation et une autre liaison entre un autre premier et un autre second contact en tant que liaison de masse et des signaux de données et/ou signaux de commande sont imprimés, en particulier modulés sur la ligne d'alimentation.

11. Système pour porte coulissante selon la revendication 10, dans lequel les signaux de données et/ou de commande contiennent des adresses qui sélectionnent le récepteur électrique auquel est destiné le signal de données et/ou signal de commande considéré.
